# EUROPÄISCHE PATENTANMELDUNG

(11) **EP 3 957 546 A1**
(43) Veröffentlichungstag der Anmeldung: **23.02.2022**
(21) Anmeldenummer: 21182246.5
(22) Anmeldetag: 29.06.2021
(51) Int. Cl.: B62D 1/16, B60R 13/08, F16J 15/32, F16C 27/06

(54) **KFZ-LENKSÄULENLAGERUNG**

(30) Priorität: 20.08.2020 DE 102020121886
(71) Anmelder: WOCO Industrietechnik GmbH, 63628 Bad Soden-Salmünster (DE)
(72) Erfinder: Dietz, Matthias, 63628 Bad Soden-Salmünster (DE)
(74) Vertreter: Schmid, Nils T.F.

(57) **Zusammenfassung**

Die vorliegende Erfindung betrifft ein elastisches Lager für eine Lenksäule eines Kraftfahrzeugs, umfassend einen Grundkörper aus einem elastischen Material, insbesondere aus einem elastomeren Material, wie EPDM, mit einer dynamischen Dichtlippe, dessen der Lenksäule zuzuwendende Dichtkontaktfläche einen geringeren Haftreibungskoeffizient als das Material des Grundkörpers aufweist.

## Beschreibung

Die vorliegende Erfindung betrifft ein elastisches Lager für eine Lenksäule eines Kraftfahrzeugs sowie eine Lenksäule für ein Kraftfahrzeug.

Bei der Auslegung von Lagern für Lenksäulen besteht ein grundsätzlicher Interessenskonflikt dahingehend, dass der Einsatz eines Elastomermaterials, wie Gummi, notwendig ist, um auch eine ausreichende Dichtungsfunktion zu erreichen. Allerdings leidet ein Gummilager darunter, dass aufgrund von Abrasionseffekten ein Verschleiß hinzunehmen ist und auch aufgrund des hohen Reib- und Haftwiderstands von Gummi höhere Kräfte aufgebracht werden müssen, um eine Bewegung der Lenksäule, z.B. die Drehbewegung beim Lenken oder auch ein axiales Bewegungsspiel, zu erreichen.

FR 82 20864 offenbart eine Lenksäulen-Lagerung, welche eine äußere Gummi-Muffe und einen Innenring aus Polyamid oder glasfaserverstärktem PTFE aufweist. Die Gummi-Muffel ist als im Querschnitt geschlitzter Ring ausgebildet, um eine Anpassbarkeit zu gewährleisten, wodurch sich allerdings die Dichtigkeit reduziert. Ferner hat sich die Lagerungsstruktur bei der Abdichtung von dynamischen Bewegungen der Lenksäule als nachteilig erwiesen.

Es ist Aufgabe der vorliegenden Erfindung, die Nachteile aus dem bekannten Stand der Technik zu verbessern, insbesondere ein einfach herzustellendes elastisches Lager für eine Lenksäule mit einer erhöhten Lebensdauer und/oder einem geringeren Durchdrehmoment bereitzustellen, insbesondere ohne die dynamische Dichtungsfunktion zu beeinträchtigen.

Diese Aufgabe wird durch die Merkmale des unabhängigen Anspruchs gelöst.

Danach ist ein elastisches Lager für eine Lenksäule eines Kraftfahrzeugs bereit gestellt. Gattungsgemäße elastische Lager können sowohl fahrgastzellenseitig als auch motorraumseitig eingesetzt werden, um die Lenksäule dichtend zu lagern. Grundsätzlich wird die Lenksäule aus der Fahrgastzelle heraus durch eine die Fahrgastzelle von dem Motorraum trennende Stirn- oder Spritzwand in den Motorraum geführt, in dem sie schließlich mit der Vorderachse des Kraftfahrzeugs verbunden ist. Sowohl fahrgastzellenseitig als auch motorraumseitig kann die Lenksäule geschmiert sein. Dies kann beispielsweise mittels einer, die Lenksäule entlang ihrer Längserstreckung abschnittsweise umgebenden elastischen Hülle, wie mittels eines Faltenbalgs, erreicht werden, dessen Innenvolumen einen Schmierraum bereitstellen kann. Die elastischen Lager können dabei fest mit der elastischen Hülle gekoppelt sein, welche wiederum fest mit der Stirn- oder Spritzwand verbunden ist, sodass ein abgedichteter, geschlossener Schmierraum für die Lenksäule bereitgestellt ist. Die elastischen Lager stellen die Dichtigkeit des Schmierraums zum einen gegenüber der Fahrgastzelle und zum anderen gegenüber dem Motorraum beziehungsweise der Umgebung sicher.

Das erfindungsgemäße elastische Lager umfasst einen Grundkörper aus einem elastischen Material. Beispielsweise kann das Material ein elastomeres Material, wie EPDM, sein. Der Grundkörper umfasst eine dynamische Dichtlippe, dessen der Lenksäule zuzuwendende Dichtkontaktfläche einen geringeren Haftreibungskoeffizient als das Material des Grundkörpers aufweist. Die dynamische Dichtlippe kann elastisch deformierbar sein und/oder ein Bewegungsspiel der Lenksäule entlang dessen Längserstreckung in Axialrichtung und quer dazu zuzulassen. Beispielsweise kann die Dichtlippe so dimensioniert und/oder angeordnet sein, dass der Dichtkontakt mit der Lenksäule im Wesentlichen ausschließlich über die dynamische Dichtlippe erfolgt. Des Weiteren ist es aufgrund der elastischen Deformierbarkeit der dynamischen Dichtlippe möglich, das elastische Lager für unterschiedliche Lenksäulen-Durchmesser einsetzen zu können. Die Dichtkontaktfläche kann dabei die radiale Innenseite der dynamischen Dichtlippe bilden. Dadurch, dass die den Dichtkontakt ausbildende beziehungsweise einnehmende Dichtkontaktfläche der Dichtlippe einen geringeren Haftreibungskoeffizient, insbesondere in Bezug auf das Lenksäulen-Material, vorzugsweise Metall, aufweist, ist das erfindungsgemäße elastische Lager dazu in der Lage, den Interessenskonflikt zwischen ausreichender Dichtigkeit und Verschleißanfälligkeit zu lösen. Das elastische Material des Grundkörpers gewährleistet die elastische Nachgiebigkeit für die Ausbildung der Dichtigkeit/Dichtungsfunktion. Die verringerte Haftreibung der Dichtkontaktfläche gegenüber dem restlichen Grundkörper verringert den Reib- und Haftwiderstand des elastischen Lagers gegenüber der Lenksäule bei dynamischen Bewegungen. Dadurch kann die Lebensdauer des elastischen Lagers erhöht werden. Es machen sich weniger stark Abrasionseffekte und Verschleiß bemerkbar. Durch die im Vergleich zum restlichen Grundkörper reduzierte Haftreibung der Dichtkontaktfläche kann die Lenksäule besser, das heißt mit weniger Widerstand, dynamische Relativbewegungen gegenüber dem elastischen Lager durchführen, indem die Lenksäule an der dynamischen Dichtkontaktfläche entlang gleitet, zum einen in Radialrichtung und zum anderen in Axialrichtung.

In einer beispielhaften Ausführung des erfindungsgemäßen Lagers ist die Dichtlippe einstückig an den Grundkörper angeformt. Beispielsweise ist die Dichtlippe mittels Spritzgießen aus einem Stück mit dem Grundkörper hergestellt. Spritgießen ist in Bezug auf die Formgebung besonders flexibel und eignet sich besonders gut für eine kostengünstige Massenfertigung.

In einer weiteren beispielhaften Ausführung der vorliegenden Erfindung ist der Grundkörper als geschlossene Ringstruktur ausgebildet. Die Ringstruktur kann eine zylindrische Durchführung beziehungsweise einen zylindrischen Innenhohlraum begrenzen. Durch diese/diesen ist die Lenksäule hindurchzuführen. Insofern kann im Montagezustand eine Rotationsmittelachse des Grundkörpers der Längsachse beziehungsweise Mittelachse der Lenksäule (Lenksäulenachse) im Wesentlichen entsprechen. Alternativ oder zusätzlich umläuft die Dichtlippe eine Mittelachse des Grundkörpers vollständig. Mit anderen Worten bildet die Dichtlippe, isoliert vom Grundkörper betrachtet, ebenfalls eine geschlossene Ringstruktur.

Gemäß einer weiteren beispielhaften Ausführung des erfindungsgemäßen Lagers ist der Grundkörper versteift. Beispielsweise kann der Grundkörper eine Versteifung, insbesondere aus Kunststoff, wie einem thermoplastischen Kunststoff, oder Metall, aufweisen. Die Versteifung kann fest an dem Grundkörper angebracht sein. Beispielsweise ist die Versteifung radial außen an dem Rundkörper angeordnet, um den elastischen Grundkörper zu versteifen. Bei der Versteifung kann es sich beispielsweise um einen Kunststoff-Einsatz oder einen Metalleinleger handeln. Ferner kann die Dichtlippe im Wesentlichen frei von einer Versteifung, insbesondere einem Kunststoff-Einsatz oder einem Metalleinleger, ausgebildet sein.

Gemäß einer beispielhaften Weiterbildung des erfindungsgemäßen Lagers ist die Versteifung von dem Material des Grundkörpers umspritzt oder in einem Zweikomponenten-Spritzgussverfahren mit dem Grundkörper hergestellt. Die Herstellung kann derart erfolgen, dass die Versteifung im Wesentlichen in den Grundkörper eingebettet ist. Mit anderen Worten ist die Versteifung von außen her nicht ersichtlich. Die Versteifung kann einen beliebigen Querschnitt aufweisen. Beispielsweise besitzt die Versteifung einen T-förmigen Querschnitt, wobei der Kopf des T's nach radial außen und der Stamm des T's nach radial innen orientiert ist.

In einer weiteren beispielhaften Ausführung des erfindungsgemäßen Lagers beträgt der Haftreibungskoeffizient der Dichtkontaktfläche höchstens 0,5. Der Haftreibungskoeffizient ist beispielsweise in Bezug auf das Material der Lenksäule, insbesondere Metall, bezogen.

Gemäß einer weiteren beispielhaften Weiterbildung des erfindungsgemäßen Lagers ist auf die Dichtkontaktfläche eine PTFE-Folie aufgebracht. Die PTFE-Folie kann eine Dicke von weniger als 0,2mm aufweisen. Das PTFE (Polytetrafluorethylen) hat einen sehr geringen Reibungskoeffizienten, sodass die Reibungskraft, insbesondere Haftreibungskraft, zwischen Lenksäule und dem elastischen Lager, insbesondere der Dichtlippe und dessen Dichtkontaktfläche, deutlich reduziert ist im Vergleich zu der Reibung, die zwischen dem Grundkörpermaterial und der Lenksäule bestehen würde. Ein weiterer Vorteil besteht darin, dass bei PTFE die Haftreibung genauso groß ist wie dessen Gleitreibung, sodass ein ruckfreies Bewegen der Lenksäule insbesondere aus dessen Ruhezustand erfolgen kann. Darüber hinaus ist das PTFE beständig gegen Benzine, Öle und weitere im Motorraum einwirkende Fluide. Beispielsweise ist die PTFE-Folie auf die Dichtkontaktfläche aufkaschiert. Für die Kaschierung kann ein geeignetes Kaschiermittel, wie ein Lack, ein Leim oder Wachs eingesetzt werden. Ferner ist es möglich, die PTFE-Folie auf die Dichtkontaktfläche aufzukleben.

In einer beispielhaften Weiterbildung des erfindungsgemäßen Lagers ist die PTFE-Folie selbstklebend ausgebildet oder durch Ätzen, insbesondere Oberflächenätzen, behandelt. Beispielsweise wird die PTFE-Folie an die Dichtkontaktfläche angespritzt, insbesondere im selben Spritzgusswerkzeug, in dem der Grundkörper hergestellt wird. Beispielsweise ist die PTFE-Folie einseitig, insbesondere nur einseitig, an einer mit dem Grundkörper zu verbindenden Verbindungsfläche geätzt oder einer die Haftfähigkeit erhöhenden Behandlung unterzogen. Beispielsweise kann die PTFE-Folie einseitig mit einem Haftvermittler versehen sein. Beispielsweise wird der Grundkörper aus der restlichen PTFE-Folie ausgestanzt.

In einer weiteren beispielhaften Ausführung des erfindungsgemäßen Lagers ist der Grundkörper ringförmig ausgebildet und die Dichtlippe erstreckt sich von einer der Lenksäule zuzuwendenden Innenmantelfläche des Grundkörpers nach radial innen. Eine radiale Abmessung der Dichtlippe kann wenigstens ein Viertel einer Gesamtradialerstreckung des Grundkörperquerschnitts betragen. Auf diese Weise weist die dynamische Dichtlippe eine ausreichende Deformationsfähigkeit und elastische Flexibilität auf, um einerseits verschiedene Lenksäulen-Durchmesser abdichten zu können und andererseits Toleranzbewegungen der Lenksäule relativ zu dem elastischen Lager zuzulassen.

Gemäß einer weiteren beispielhaften Weiterbildung der vorliegenden Erfindung ist die Dichtlippe gekrümmt geformt. Beispielsweise ist die Dichtlippe derart gekrümmt, dass die Dichtkontaktfläche konvex geformt ist. Beispielsweise ergibt sich eine rüsselartige Querschnittsform der Dichtlippe. Beispielsweise kann die Dichtlippe derart gekrümmt geformt sein, dass im undeformierten Vormontagezustand ein radial innenseitiger Endabschnitt der dynamischen Dichtlippe in Richtung der Mittelachse des Grundkörpers orientiert ist, insbesondere im Wesentlichen parallel zur Innenmantelfläche des Grundkörpers orientiert ist. Die konvexe Krümmung der Dichtlippe ergibt sich von der Mittelachse aus betrachtet.

Gemäß einer weiteren beispielhaften Ausführung des erfindungsgemäßen Lagers ist die Dichtlippe derart dimensioniert und/oder flexibel ausgebildet, dass bei einem dynamischen Dichtbetriebszustand die Dichtlippe mit der Innenmantelfläche des Grundkörpers in Kontakt geraten kann. Ein dynamischer Dichtbetriebszustand kann beispielsweise bei einer Relativbewegung der Lenksäule bezüglich des elastischen Lagers auftreten, beispielsweise wenn mit der Lenksäule gelenkt wird oder von außen Kräfte auf das Lager und/oder die Dichtlippe einwirken, wie beispielsweise Erschütterungen während der Fahrt. Die Dichtlippe kann mit der Innenmantelfläche des Grundkörpers in dem dynamischen Dichtbetriebszustand derart in Kontakt geraten, dass eine der Dichtkontaktfläche gegenüberliegender Anschlagflanke der Dichtlippe mit der Innenmantelfläche des Grundkörpers in Kontakt geraten kann, insbesondere an diese anschlagen kann. Beispielsweise ist die Anschlagflanke frei von einer reibungsreduzierenden Eigenschaft, insbesondere ohne PTFE-Folie ausgebildet.

Gemäß einem weiteren Aspekt der vorliegenden Erfindung, der mit den vorhergehenden Aspekten und beispielhaften Ausführungen kombinierbar ist, ist eine Lenksäule für ein Kraftfahrzeug bereitgestellt. Die Lenksäule umfasst ein nach einem der zuvor beschriebenen Aspekte beziehungsweise beispielhaften Ausführungen ausgebildetes elastisches Lager. Beispielsweise bildet das elastische Lager mit der Lenksäule einen insbesondere dynamischen Dichtkontakt aus. Die Lenksäule kann sich durch eine innenzylindrische Durchführung durch das elastische Lager hindurch erstrecken und mit der dynamischen Dichtlippe, insbesondere dessen Dichtkontaktfläche, in einem Dichtkontakt sich befinden. Aufgrund der haftreibungsreduzierten Dichtkontaktfläche im Vergleich zum restlichen Material des Grundkörpers ist eine besonders gute Gleiteigenschaft der Dichtlippe relativ zu dem elastischen Lager gegeben, sodass die Lenksäule insbesondere ruckfrei und/oder mit einem reduzierten Kraftaufwand bewegt werden kann.

Gemäß einer beispielhaften Ausführung der erfindungsgemäßen Lenksäule umfasst die Lenksäule ferner ein zweites nach einem der zuvor beschriebenen Aspekte beziehungsweise beispielhaften Ausführungen ausgebildetes elastisches Lager. Dabei ist ein elastisches Lager fahrgastzellenseitig und ein elastisches Lager motorraumseitig anzuordnen. Das fahrgastzellenseitige und das motorraumseitige elastische Lager sind dabei in einem Abstand in Lenksäulenrichtung zueinander angeordnet. Das fahrgastzellenseitige elastische Lager dichtet und lagert die Lenksäule im Bereich der Fahrgastzelle ab und das motorraumseitige elastische Lager dichtet und lagert die Lenksäule im Motorraum ab.

Gemäß einer weiteren beispielhaften Ausführung der erfindungsgemäßen Lenksäule ist das elastische Lager mit einer elastischen Hülle, wie einem Faltenbalg, fest verbunden. Beispielsweise ist der Grundkörper mit der elastischen Hülle verbunden, beispielsweise an einer radial außenseitigen, in Radialrichtung orientierten Stirnfläche des Grundkörpers. Die elastische Hülle ist dazu bestimmt, die Lenksäule gegenüber einer der Fahrgastzelle von dem Motorraum trennenden Stirnwand, durch die die Lenksäule hindurchzuführen ist, abzudichten. Die Stirn- oder Spritzwand trennt dabei den Motorraum von der Fahrgastzelle und verhindert das Eindringen von Fluiden und anderen Partikeln von der Umgebung in die Fahrgastzelle. Gemäß einer beispielhaften Weiterbildung sind das fahrgastzellenseitige und das motorraumseitige elastische Lager jeweils mit einer elastischen Hülle, wie einem Faltenbalg, fest verbunden, der andererseits fest mit der Stirn- beziehungsweise Trennwand fest verbunden ist. Die elastische Hülle, die beispielsweise aus einem elastischen Material, wie Gummi, hergestellt sein kann, dichtet zum einen den in Bezug auf die Lenksäule bereitgestellten Schmierraum gegenüber der Umgebung ab, insbesondere in Zusammenarbeit mit dem wenigstens einen elastischen Lager, zum anderen schafft die elastische Hülle einen Toleranzausgleich für Längs- und/oder Radialtoleranzbewegungen der Lenksäule. Grundsätzlich wird die Lenksäule aus der Fahrgastzelle heraus durch eine die Fahrgastzelle von dem Motorraum trennende Stirn- oder Spritzwand in den Motorraum geführt, in dem sie schließlich mit der Vorderachse des Kraftfahrzeugs verbunden ist. Sowohl fahrgastzellenseitig als auch motorraumseitig kann die Lenksäule geschmiert sein. Dies kann beispielsweise mittels einer, die Lenksäule entlang ihrer Längserstreckung abschnittsweise umgebenden elastischen Hülle, wie mittels eines Faltenbalgs, erreicht werden, dessen Innenvolumen einen Schmierraum bereitstellen kann.

In einer weiteren beispielhaften Ausführung des erfindungsgemäßen Lagers ist das Lager, insbesondere der Grundkörper, beispielsweise eine radialaußenseitige Stirnfläche des Grundkörpers, fest mit einer die Lenksäule gegenüber einer die Fahrgastzelle von dem Motorraum trennenden Stirnwand, durch die die Lenksäule hindurchzuführen ist, abzudichtenden elastischen Hülle, wie einem Faltenbalg, verbunden. Die elastische Hülle wiederum kann im Montagezustand fest mit der Trenn- beziehungsweise Spritzwand verbunden sein. Der Grundkörper des Lagers zusammen mit der elastischen Hülle kann einen Schmierraum für die Lenksäule bereitstellen und diesen gegenüber der Umgebung abdichten.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1:: Eine schematische Prinzip-Skizze einer erfindungsgemäßen Lenksäule mit einem erfindungsgemäßen elastischen Lager;
- Figur 2:: Eine Querschnittsansicht eines erfindungsgemäßen elastischen Lagers;
- Figur 3:: Eine Querschnittsansicht einer weiteren beispielhaften Ausführung eines erfindungsgemäßen elastischen Lagers;
- Figur 4:: Eine perspektivische Ansicht des erfindungsgemäßen elastischen Lagers aus Figur 2.

In der folgenden Beschreibung beispielhafter Ausführungen der vorliegenden Erfindung anhand der beiliegenden Figuren ist ein erfindungsgemäßes elastisches Lager im Allgemeinen mit der Bezugsziffer 1 versehen. Für die folgende Beschreibung beispielhafter Ausführungen kann davon ausgegangen werden, dass das erfindungsgemäße elastische Lager 1 eine geschlossene Ringstruktur mit einer mittigen zylindrischen Durchführung für die Lenksäule, die im Allgemeinen mit der Bezugsziffer 3 versehen ist, aufweist.

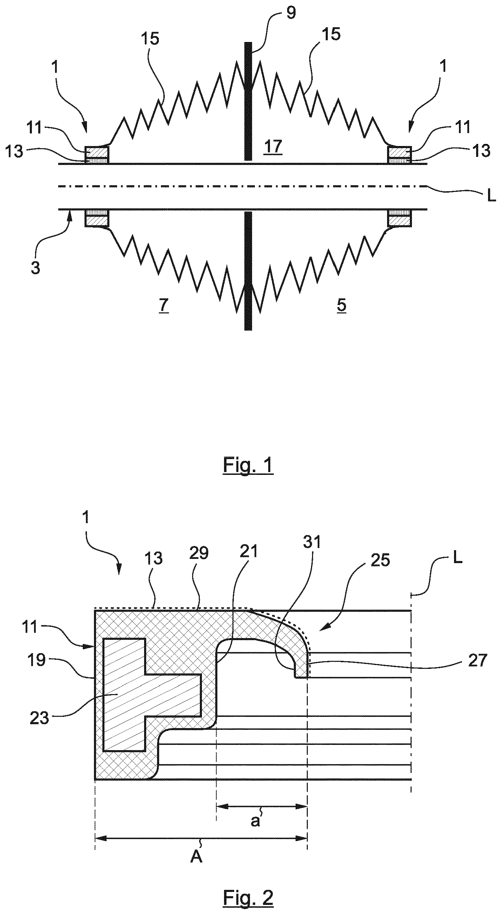

In Figur 1 ist eine schematische Darstellung zur Einbausituation und zum Montagezustand eines erfindungsgemäßen elastischen Lagers 1 an einer erfindungsgemäßen Lenksäule 3 gezeigt. Die teilweise abgebildete Lenksäule 3 erstreckt sich ausgehend von einer Fahrgastzelle (in Figur 1 rechts) 5 durch eine die Fahrtgastzelle 5 von einem Motorraum 7 (in Figur 1 links) eines Kraftfahrzeugs trennenden Stirn- oder Spritzwand 9 hindurch in den Motorraum 7. Die Lenksäule 3 ist durch ein fahrgastzellenseitiges, erfindungsgemäßes elastisches Lager 1 gelagert beziehungsweise abgedichtet sowie durch ein motorraumseitiges, erfindungsgemäßes elastisches Lager 1. Das Lager 1 ist schematisch und in vergrößerter Darstellung abgebildet.

Auf die bevorzugten Ausführungen elastischer Lager 1 wird weiter unten eingegangen. In Figur 1 ist bereits zu erkennen, dass das elastische Lager 1 einen radialaußenseitigen Grundkörper 11 aufweist, der radial innenseitig einen geringeren Haftreibungskoeffizient als radial außenseitig aufweist, was in der bevorzugten Ausführung durch eine aufgebrachte, beispielsweise angespritzte, aufgeklebte oder aufkaschierte, PTFE-Folie 13 realisiert ist. In Figur 1 ist ferner zu erkennen, dass die elastischen Lager 1, insbesondere deren Grundkörper 11, fest verbunden sind mit einer elastischen Hülle 15, die beispielsweise ein Faltenbalg sein kann, der jeweils wiederum mit der Stirnwand 9 fest verbunden ist. Dadurch ist ein Schmierraum 17 für die Lenksäule 3 geschaffen, der sowohl fahrgastzellenseitig als auch motorraumseitig vorhanden ist. Die Abdichtung gegenüber der Umgebung erfolgt jeweils über die elastischen Lager 1.

Bezugnehmend auf die Figuren 2 - 4 werden beispielhafte Ausführungen erfindungsgemäßer elastischer Lager 1 beschrieben. Das elastische Lager 1 umfasst einen Grundkörper 11 aus einem elastischen Material, insbesondere einem elastomeren Material, wie EPDM, der für die elastische Deformierbarkeit und die wesentliche Dichtungsfunktion des elastischen Lagers 1 verantwortlich ist. Der Grundkörper 11 bildet im Wesentlichen eine geschlossene Ringstruktur und weist eine im Wesentlichen hohlzylindrische Struktur auf. Radial außenseitig weist der Grundkörper 11 eine Stirnfläche 19 auf, die im Wesentlichen in Richtung der Längsachse L, die auch als Lenksäulenachse bezeichnet werden kann, orientiert ist, sowie eine radialinnenseitige, im Wesentlichen parallel zur Stirnfläche 19 orientierte, Innenmantelfläche 21 auf. Die Innenmantelfläche 21 kann abgestuft ausgebildet sein. Dies bedeutet, dass sich die Wandstärke des Grundkörpers 11 in Richtung der Längsachse L insbesondere stufenartig verändern kann.

Der Grundkörper 11 kann eine Versteifung 23 aufweisen, die beispielsweise als Kunststoff-Einsatz oder Metalleinleger ausgebildet sein kann. Beispielsweise ist, so wie es in Figur 2 dargestellt ist, die Versteifung 23 von dem Material des Grundkörpers 11 vollständig umgeben. Dies kann beispielsweise dadurch erreicht werden, dass die Versteifung von dem Material des Grundkörpers 11 umspritzt ist. Beispielsweise können der Grundkörper 11 und die Versteifung 23 in einem Zweikomponenten-Spritzgussverfahren hergestellt sein. Die Versteifung kann beispielsweise einen T-förmigen Querschnitt aufweisen, wobei die T-Form in Radialrichtung, quer zur Längsachse L orientiert ist.

Das elastische Lager 1 weist ferner eine einstückig an den Grundkörper 11 angeformte, insbesondere aus einem Stück mittels Spritzgießen mit dem Grundkörper 11 hergestellte dynamische Dichtlippe 25 auf. Die dynamische Dichtlippe 25 erstreckt sich nach radial innen ausgehend von der Innenmantelfläche 21. Die Länge a der dynamischen Dichtlippe 25 kann dabei wenigstens ¼ der Gesamtradialerstreckung A des Grundkörperquerschnitts 11 betragen.

Wie es in Figur 2 abgebildet ist, weist die Dichtlippe 25 eine rüsselartige Struktur auf. Die Dichtlippe 25 weist eine von der Längsachse L aus betrachtet konvexe, der Lenksäule 3 zuzuwendende Dichtkontaktfläche 27 auf, die im Wesentlichen den dynamischen Dichtkontakt mit der Lenksäule 3 ausbildet. Die dynamische Dichtlippe 25 schließt unmittelbar an eine in Radialrichtung orientierte Oberseite 29 des elastischen Lagers 1 beziehungsweise des Grundkörpers 11 an. In Richtung der Längsachse L erstreckt sich die dynamische Dichtlippe 25 um etwa 1/3 der Gasamtaxialerstreckung des Lagers 1, wobei eine Axiallänge im Bereich von ¼ - ¾ der Gesamtlängserstreckung des elastischen Lagers 1 denkbar ist.

Der dynamischen Dichtkontaktfläche 27 gegenüberliegend weist die dynamische Dichtlippe 25 eine Anschlagkontaktfläche 31 auf, die der Innenmantelfläche 21 des Grundkörpers 11 zugewandt ist. Je nach Lenksäulen-Durchmesser der zu lagernden und/oder abzudichtenden Lenksäule 3 variiert der lichte Abstand zwischen Innenmantelfläche 21 und Anschlagkontaktfläche 31. Die dynamische Dichtlippe ist insbesondere in Bezug auf den Grundkörper 11 elastisch verformbar, um zum einen verschiedene Lenksäulen-Durchmesser zu lagern und abdichten zu können sowie zum anderen dynamische Relativbewegungen zwischen Lenksäule 3 und elastischem Lager 1 zuzulassen. Bei einem dynamischen Dichtbetriebszustand kann es dazu kommen, dass sich die dynamische Dichtlippe 25 derart deformiert, dass die Anschlagkontaktfläche 31 mit der Innenmantelfläche 21 in Kontakt gerät, insbesondere an diese anschlägt.

In Figur 2 ist durch eine gestrichelte Linie die verringerte Haftreibung der dynamischen Dichtlippe 25 sowie auch der Oberseite 29 angedeutet. Um die verringerte Haftreibung gegenüber dem Elastormermaterial des Grundkörpers 11 zu realisieren, ist eine durch die gestrichelte Linie angedeutete PTFE-Folie 13 auf die dynamische Dichtlippe 25 und optional, wie es in Figur 2 dargestellt ist, auf die Oberseite 29 des Grundkörpers 11 aufgebracht, insbesondere aufgespritzt, aufgeklebt oder aufkaschiert. Entscheidend ist, dass die den dynamischen Dichtkontakt ausbildende Dichtkontaktfläche 27 der dynamischen Dichtlippe mit der PTFE-Folie 13 versehen ist, sodass bei der dynamischen Abdichtung und Lagerung der Lenksäule 3 ein verringerter Haftreibungskoeffizient zwischen elastischem Lager 1 und Lenksäule 3 besteht, sodass beispielsweise ruckfrei die Lenksäule relativ zu dem elastischen Lager 1 insbesondere aus einem Stillstand bewegt werden kann und/oder verringerte Stellkräfte beim Bewegen der Lenksäule 3 notwendig sind. Darüber hinaus erhöht die PTFE-Folie 13 aufgrund ihrer Beständigkeit und geringen Verschleißanfälligkeit deutlich die Lebensdauer des elastischen Lagers 1. Die Verbindung von PTFE-Folie 13 und Grundkörper 11 ist fest.

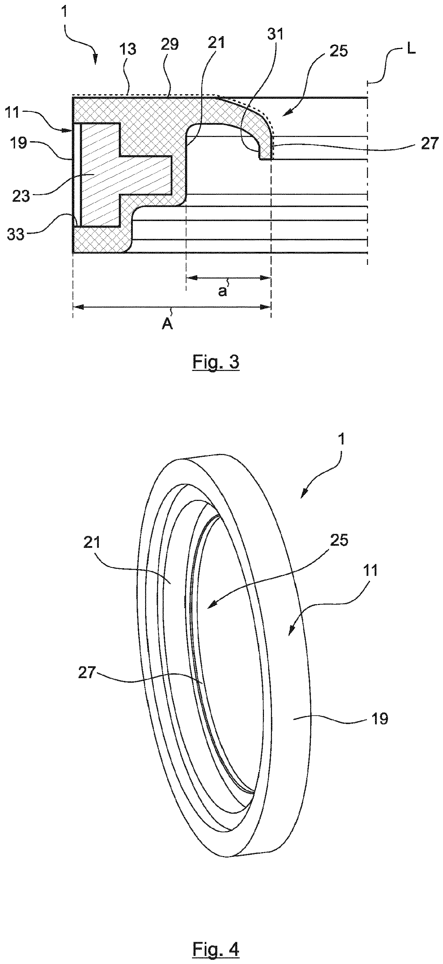

In Figur 3 ist eine alternative Ausführung des erfindungsgemäßen elastischen Lagers 1 abgebildet, wobei im Wesentlichen auf die vorhergehende Beschreibung verwiesen werden kann. Im Unterschied zur Ausführung gemäß Figur 2 ist die Versteifung 23 nicht vollständig von dem Material des Grundkörpers 11 umgeben, sondern in einer radialaußenseitigen, insbesondere T-Förmigen, Vertiefung 33 aufgenommen. Die Versteifung 23 kann eingeklippst und/oder zusätzlich eingeklebt sein. Ferner ist es möglich, dass die Versteifung 23 form- und/oder kraftschlüssig in der Vertiefung 33 befestigt ist, z.B. über eine formkomplementäre Vorsprung-Vertiefung-Struktur (nicht dargestellt) an einer Außenseite der Versteifung 23 und einer Innenseite der Vertiefung 33.

In Figur 4 ist das elastische Lager gemäß Figur 2 in perspektivischer Ansicht abgebildet. Insbesondere ist die geschlossene Ringstruktur zu erkennen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Elastisches Lager
- 3: Lenksäule
- 5: Fahrgastzelle
- 7: Motorraum
- 9: Stirnwand
- 11: Grundkörper
- 13: PTFE-Folie
- 15: Elastische Hülle
- 17: Schmierraum
- 19: Stirnfläche
- 21: Innenmantelfläche
- 23: Versteifung
- 25: Dichtlippe
- 27: Dichtkontaktfläche
- 29: Oberseite
- 31: Anschlagkontaktfläche
- 33: Vertiefung

- L: Längsachse
- a: Radiale Erstreckung der Dichtlippe
- A: Gesamtradialerstreckung des Grundkörperquerschnitts

## Patentansprüche

1. Elastisches Lager (1) für eine Lenksäule (3) eines Kraftfahrzeugs, umfassend einen Grundkörper (11) aus einem elastischen Material, insbesondere aus einem elastomeren Material, wie EPDM, mit einer dynamischen Dichtlippe (25), dessen der Lenksäule (3) zuzuwendende Dichtkontaktfläche (27) einen geringeren Haftreibungskoeffizient als das Material des Grundkörpers aufweist.

2. Lager (1) nach Anspruch 1, wobei die Dichtlippe (25) einstückig an den Grundkörper (11) angeformt ist, insbesondere mittels Spritzgießen aus einem Stück mit dem Grundkörper (11) hergestellt ist.

3. Lager (1) nach Anspruch 1 oder 2, wobei der Grundkörper (11) als geschlossene Ringstruktur ausgebildet ist und/oder wobei die Dichtlippe (25) eine Mittelachse des Grundkörpers vollständig umläuft.

4. Lager (1) nach einem der vorstehenden Ansprüche, wobei der Grundkörper (11) versteift ist, wobei insbesondere der Grundkörper (11) eine Versteifung, insbesondere aus Kunststoff, wie einem thermoplastischen Kunststoff, oder Metall, aufweist.

5. Lager (1) nach Anspruch 4, wobei die Versteifung von dem Material des Grundkörpers umspritzt ist oder in einem Zweikomponenten-Spritzgussverfahren mit dem Grundkörper (11) hergestellt ist, insbesondere derart hergestellt ist, dass die Versteifung im Wesentlichen in den Grundkörper (11) eingebettet ist.

6. Lager (1) nach einem der vorstehenden Ansprüche, wobei der Haftreibungskoeffizient der Dichtkontaktfläche (27) höchstens 0,5 beträgt.

7. Lager (1) nach einem der vorstehenden Ansprüche, wobei auf die Dichtkontaktfläche (27) eine PTFE-Folie (13), insbesondere mit einer Dicke von weniger als 0,2 mm, aufgebracht, insbesondere aufkaschiert, ist.

8. Lager (1) nach Anspruch 7, wobei die PTFE-Folie (13) selbstklebend ausgebildet oder durch Ätzen behandelt ist, sodass die PTFE-Folie (13) eine feste Verbindung mit dem Grundkörper (11) bildet, wobei insbesondere die PTFE-Folie (13) einseitig an einer mit dem Grundkörper (11) zu verbindenden Verbindungsfläche geäzt ist oder einer die Haftfähigkeit erhöhenden Behandlung unterzogen ist, insbesondere mit einem Haftvermittler versehen ist.

9. Lager (1) nach einem der vorstehenden Ansprüche, wobei der Grundkörper (11) ringförmig ausgebildet ist und die Dichtlippe (25) sich von einer der Lenksäule (3) zuzuwendenden Innenmantelfläche des Grundkörpers nach radial innen erstreckt, insbesondere um wenigstens 1/4 einer Gesamtradialerstreckung des Grundkörperquerschnitts.

10. Lager (1) nach einem der vorstehenden Ansprüche, wobei die Dichtlippe (25) gekrümmt geformt ist, insbesondere derart gekrümmt ist, dass die Dichtkontaktfläche (27) konvex geformt ist.

11. Lager (1) nach einem der Ansprüche 9 bis 10, wobei die Dichtlippe (25) derart dimensioniert und/oder flexibel ausgebildet ist, dass bei einem dynamischen Dichtbetriebszustand die Dichtlippe (25) mit der Innenmantelfläche in Kontakt geraten kann, insbesondere derart, dass eine der Dichtkontaktfläche (27) gegenüberliegende Anschlagflanke der Dichtlippe, welche insbesondere frei von einer reibungsreduzierenden Eigenschaft ist, mit der Innenmantelfläche in Kontakt geraten kann.

12. Lager (1) nach einem der vorstehenden Ansprüche, wobei das Lager, insbesondere der Grundkörper, beispielsweise eine radial außenseitige Stirnfläche des Grundkörpers, fest mit einer die Lenksäule (3) gegenüber einer die Fahrgastzelle von dem Motorraum trennenden Stirnwand, durch die die Lenksäule (3) hindurchzuführen ist, abzudichtenden elastischen Hülle, wie einem Faltenbalg, verbunden.

13. Lenksäule (3) für ein Kraftfahrzeug, umfassend ein nach einem der vorstehenden Ansprüche ausgebildetes elastisches Lager.

14. Lenksäule (3) nach Anspruch 13, ferner umfassend ein zweites nach einem der Ansprüche 1 bis 11 ausgebildetes elastisches Lager, wobei ein elastisches Lager (1) fahrgastzellenseitig und ein elastisches Lager (1) motorraumseitig anzuordnen ist.

15. Lenksäule (3) nach Anspruch 13 oder 14, wobei das elastische Lager (1) mit einer elastischen Hülle, wie einem Faltenbalg, fest verbunden ist, die dazu bestimmt ist, die Lenksäule (3) gegenüber einer die Fahrgastzelle von dem Motorraum trennenden Stirnwand, durch die die Lenksäule (3) hindurchzuführen ist, abzudichten, wobei insbesondere das fahrgastzellenseitige und das motorraumseitige elastische Lager (1) jeweils fest mit einer elastischen Hülle, wie einem Faltenbalg, fest verbunden sind.
